# DEMANDE DE BREVET EUROPEEN

(11) **EP 4 685 010 A1**
(43) Date de publication de la demande: **28.01.2026**
(21) Numéro de dépôt: 25190917.2
(22) Date de dépôt: 22.07.2025
(51) Int. Cl.: B60Q 1/26, B60R 13/02, B60R 19/02

(54) **ELÉMENT DE GARNISSAGE COMPRENANT UNE ZONE DE DÉCOR PRÉSENTANT UN CONTOUR RÉTROÉCLAIRÉ**

(30) Priorité: 22.07.2024 FR 2408050
(71) Demandeur: Flex-N-Gate France, 25405 Audincourt (FR)
(72) Inventeur: Laurençot, David, 25550 RAYNANS (FR); VERBRUGGHE, Jérôme, 90300 ELOIE (FR); RECEVEUR, Thierry, 25310 VILLARS LES BLAMONT (FR)
(74) Mandataire: Lavoix

(57) **Abrégé**

L'élément (1) comprend :
- une zone de décor (2) s'étendant entre une face interne et une face externe (5), sensiblement translucide ;
- une zone périphérique (4) entourant une partie de la zone de décor (2), et s'étendant entre une face interne et une face externe (5) et étant opaque ;
- une couche de revêtement opaque (6) s'étendant sur une partie de la face externe (5),
- au moins une zone rétroéclairée (8) formée par la partie de la zone de décor s'étendant entre la couche de revêtement opaque (6) et la zone périphérique (4), ladite zone rétroéclairée (8) s'étendant entre un premier bord (7), formé par un bord de la couche de revêtement opaque, et un deuxième bord (9), formé par un bord de la zone périphérique (4), ladite zone rétroéclairée (8) laissant passer la lumière de la face interne à la face externe (5).

## Description

La présente invention concerne un élément de garnissage de véhicule comprenant:
- au moins une zone de décor s'étendant entre une face interne et une face externe, ladite zone de décor étant sensiblement translucide de sorte à laisser passer la lumière de la face interne à la face externe ;
- au moins une zone périphérique entourant au moins une partie de la zone de décor, ladite zone périphérique s'étendant entre une face interne et une face externe et étant opaque de sorte à empêcher le passage de la lumière de la face interne à la face externe ;
- une couche de revêtement opaque s'étendant sur une partie de la face externe de la zone de décor, de sorte à empêcher le passage de la lumière au travers de la partie de la zone de décor s'étendant en regard de la couche de revêtement opaque,
au moins une zone rétroéclairée formée par la partie de la zone de décor s'étendant entre la couche de revêtement opaque et la zone périphérique, ladite zone rétroéclairée s'étendant entre un premier bord, formé par un bord de la couche de revêtement opaque, et un deuxième bord, formé par un bord de la zone périphérique, ladite zone rétroéclairée laissant passer la lumière de la face interne à la face externe.

L'invention concerne par exemple un élément de garnissage destiné à former un élément de carrosserie de véhicule.

Il est connu de munir un tel élément de garnissage d'une zone de décor présentant un aspect et/ou une forme particuliers par rapport au reste de l'élément de garnissage afin de conférer un aspect particulier à cet élément de garnissage. Ainsi, il peut être prévu d'intégrer un médaillon ou autre dans l'élément de garnissage par exemple pour montrer un symbole représentatif du modèle du véhicule ou un logo du constructeur automobile.

Il peut être prévu d'éclairer la zone de décor afin d'améliorer encore l'aspect de l'élément de garnissage. Un tel éclairage est plus particulièrement un rétroéclairage, c'est-à-dire que la lumière éclairant la zone de décor est émise du côté d'une surface interne de l'élément de garnissage et traverse la zone de décor pour être visible du côté de la surface externe de l'élément de garnissage.

Cependant, l'intégration d'un médaillon et d'un rétroéclairage dans un élément de garnissage est une opération complexe et l'aspect de l'élément de garnissage obtenu peut encore être amélioré.

L'un des buts de l'invention est alors de proposer un élément de garnissage comprenant une zone de décor dont une partie est rétroéclairée de façon simple et présentant un aspect satisfaisant.

A cet effet, l'invention a pour objet un élément de garnissage de véhicule comprenant:
- au moins une zone de décor s'étendant entre une face interne et une face externe, ladite zone de décor étant sensiblement translucide de sorte à laisser passer la lumière de la face interne à la face externe ;
- au moins une zone périphérique entourant au moins une partie de la zone de décor, ladite zone périphérique s'étendant entre une face interne et une face externe et étant opaque de sorte à empêcher le passage de la lumière de la face interne à la face externe ;
- une couche de revêtement opaque s'étendant sur une partie de la face externe de la zone de décor, de sorte à empêcher le passage de la lumière au travers de la partie de la zone de décor s'étendant en regard de la couche de revêtement opaque,
au moins une zone rétroéclairée formée par la partie de la zone de décor s'étendant entre la couche de revêtement opaque et la zone périphérique, ladite zone rétroéclairée s'étendant entre un premier bord, formé par un bord de la couche de revêtement opaque, et un deuxième bord, formé par un bord de la zone périphérique, ladite zone rétroéclairée laissant passer la lumière de la face interne à la face externe.

La réalisation d'un élément de garnissage comprenant une zone de décor dont au moins une partie du pourtour est rétroéclairée permet d'obtenir un contraste net et la mise en valeur de la forme représentée dans la zone de décor.

Suivant d'autres aspects avantageux de l'invention, l'élément de garnissage comprend une ou plusieurs des caractéristiques suivantes, prises isolément ou suivant toutes les combinaisons techniquement possibles :
- la zone rétroéclairée et la zone périphérique sont venues de matière comprenant un matériau translucide pour former la zone de décor et un matériau opaque formant la zone périphérique ;
- la couche de revêtement opaque est réalisée en un matériau métallique ;
- la couche de revêtement opaque est réalisée en peinture ou en encre.
- la zone périphérique entoure complètement la zone de décor ;
- la zone rétroéclairée entoure complètement la partie de la zone de décor revêtue du revêtement opaque ;
- une source de lumière est placée du côté de la face interne de la zone de décor, ladite source de lumière produisant une lumière visible depuis la face externe de la zone rétroéclairée ;
- l'élément de garnissage comprend au moins une zone rétroéclairée interne, totalement entourée par la couche de revêtement opaque, définie par toute partie de la zone de décor dont la face externe est dépourvue de revêtement opaque.

Selon un autre aspect, l'invention concerne également un procédé de réalisation d'un élément de garnissage tel que décrit ci-dessus, le procédé contenant les étapes suivantes :
- réalisation d'une zone de décor en un matériau translucide ;
- réalisation d'une zone périphérique en un matériau opaque autour d'au moins une partie de la zone de décor ;
- application d'une couche de revêtement opaque sur la face externe d'au moins une partie de la zone de décor ;
- définition d'une zone rétroéclairée s'étendant entre un premier bord, formé par un bord de la couche de revêtement opaque, et un deuxième bord, formé par un bord de la zone périphérique, ladite zone rétroéclairée laissant passer la lumière de la face interne à la face externe.

Suivant d'autres aspects avantageux de l'invention, le procédé de réalisation de l'élément de garnissage comprend une ou plusieurs des caractéristiques suivantes, prises isolément ou suivant toutes les combinaisons techniquement possibles :
- une couche de revêtement opaque est appliquée par dépôt physique en phase vapeur d'un matériau métallique ;
- la couche de revêtement opaque est appliquée par l'une des méthodes du groupe comprenant : le dépôt de peinture, la sérigraphie, la tampographie, et l'impression jet d'encre.;
- la couche de revêtement opaque recouvre la totalité de la face externe de la zone de décor dont une partie est retirée afin de former la zone rétroéclairée ;
- la zone de décor et la zone périphérique sont réalisées d'une seule pièce par injection bi-matière ;
- le procédé comprend une étape supplémentaire d'ablation d'une partie de la couche de revêtement opaque pour réaliser au moins une zone rétroéclairée interne totalement entourée par la couche de revêtement opaque.

L'invention apparaîtra plus clairement à la lecture de la description qui va suivre, donnée uniquement à titre d'exemple non limitatif, et faite en référence aux dessins dans lesquels :
[Fig. 1] - la figure 1 est une vue de face d'un élément de garnissage selon l'invention,
[Fig. 2] - la figure 2 est une vue en coupe schématique d'une partie de l'élément de garnissage, selon l'axe II-II, de la figure 1,
[Fig. 3] - la figure 3 est une vue en coupe schématique de la partie d'élément de garnissage de la figure 2 au cours d'une étape de réalisation de l'élément de garnissage,

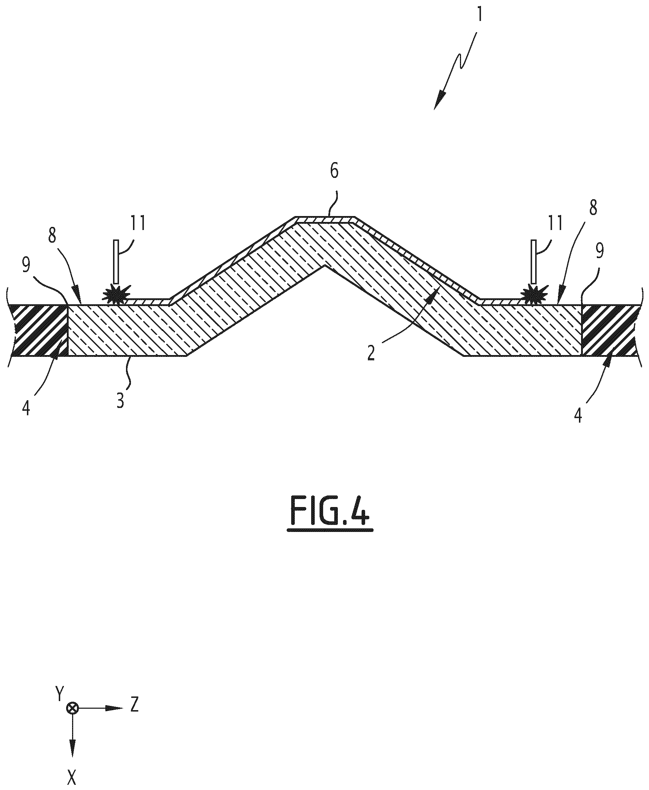

[Fig. 4] - la figure 4 est une vue en coupe schématique de la partie d'élément de garnissage de la figure 2, au cours d'une autre étape de réalisation de l'élément de garnissage,
[Fig. 5] - la figure 5 est une vue de coupe schématique de l'élément de garnissage de la figure 2,après la dernière étape du procédé,
[Fig. 6] - la figure 6 est une vue de face d'un élément de garnissage selon un mode de réalisation complémentaire.

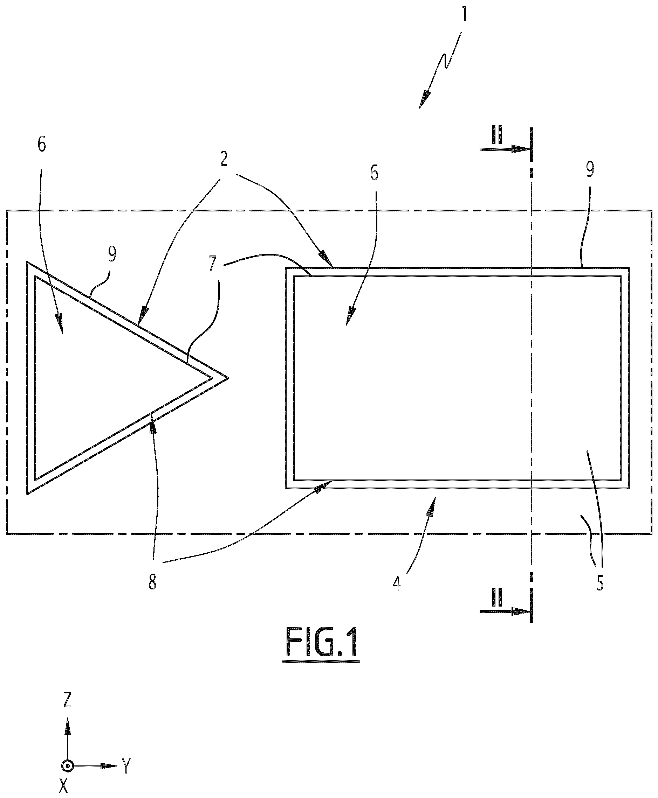

En référence à la Fig. 1, on décrit un élément de garnissage 1 de véhicule s'étendant entre une face interne 3, destinée à être tournée vers le véhicule sur lequel l'élément de garnissage 1 est installé, et une face externe 5, visible sur la figure 1, opposée à la face interne 3 et destinée à être tournée vers l'extérieur du véhicule. L'épaisseur de l'élément de garnissage 1 est définie comme étant la distance entre la face interne 3 et la face externe5 et s'étend selon une direction longitudinale X, correspondant par exemple à la direction avant-arrière du véhicule. La face interne 3 et la face externe 5 s'étendent généralement selon une direction transversale Y, correspondant par exemple à la largeur du véhicule une direction d'élévation Z, correspondant par exemple à la hauteur du véhicule.

L'élément de garnissage 1 est, par exemple, un élément de carrosserie de véhicule, comme une peau de pare-choc ou autre.

L'élément de garnissage 1 comprend au moins une zone de décor 2, formant par exemple un médaillon, ainsi qu'au moins une zone périphérique 4 qui entoure au moins une partie de la zone de décor 2. La face externe 5 de la zone de décor 2, située du côté externe de l'élément de garnissage 1, est revêtue en partie d'une couche de revêtement sensiblement opaque 6. Comme cela sera décrit plus en détail ultérieurement, entre la couche de revêtement opaque 6 et la zone périphérique 4, l'élément de garnissage 1 comprend une zone dite rétroéclairée 8..

Par « opaque », on entend que la couche de revêtement ne laisse pas passer la lumière dans le domaine visible de sa face interne à sa face externe. En d'autres termes, si la couche de revêtement est éclairée du côté de sa face interne, la lumière ne traverse pas la couche de revêtement et n'est pas visible du côté de sa face externe.

La zone périphérique 4 est opaque, c'est-à-dire qu'elle ne laisse pas passer la lumière, au moins depuis la face interne 3vers la face externe 5. Pour ce faire, la zone périphérique 4 est réalisée en un matériau opaque empêchant la lumière de traverser l'épaisseur de la zone de périphérique 4.

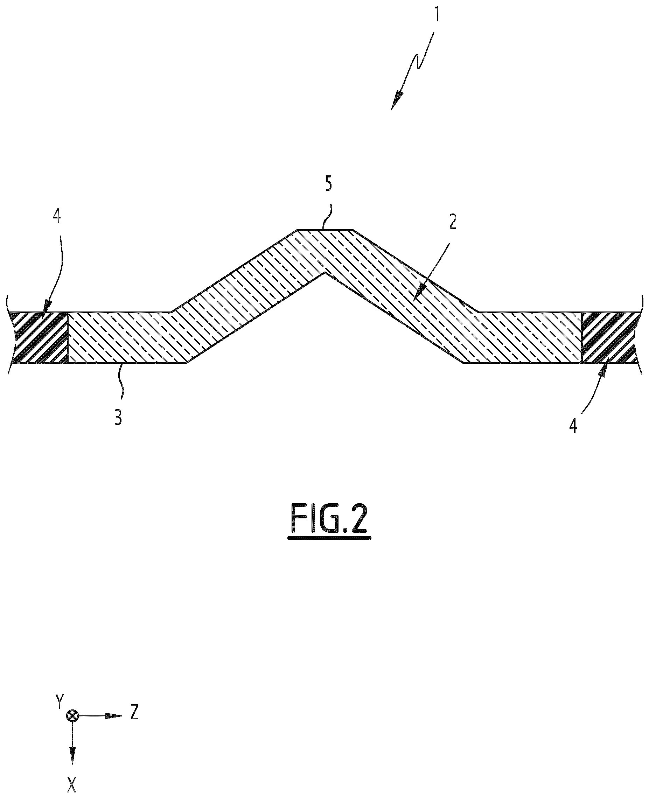

La zone de décor 2 est sensiblement translucide, au moins depuis la face interne 3 vers la face externe 5. La zone de décor 2 peut présenter toute forme souhaitée, par exemple une forme géométrique quelconque, une forme de logo, un symbole alphanumérique ou autre. Comme visible sur la figure 2, la zone de décor 2 peut s'étendre au moins en partie en saillie vers l'extérieur de la face externe 5 de la zone périphérique. En variante, la zone de décor 2 peut s'étendre en creux vers l'intérieur de la face externe 5 de la zone périphérique 4 ou être affleurante avec la face externe 5 de la zone périphérique 4 de sorte que la face externe 5 de l'élément de garnissage est sensiblement plane. ou bombée.

Par « translucide » on entend que la zone de décor laisse passer au moins une partie de la lumière dans le domaine visible depuis sa face interne 3 vers sa face externe 5, en particulier il est possible qu'elle laisse passer toute la lumière visible. En d'autres termes, une lumière émise du côté de face interne 3 de la zone de décor 2 peut traverser l'épaisseur de la zone de décor 2 pour être visible sur la face externe 5 de celle-ci.

Selon un mode de réalisation, l'élément de garnissage 1 comprend au moins deux zones de décor 2 distinctes écartées l'une de l'autre comme représenté sur la figure 1, dans laquelle deux zones de décors 2A, 2B de formes différentes sont représentées. Les différentes zones de décors peuvent être de formes et de dimensions quelconques et différentes les unes des autres.

Comme indiqué précédemment, la zone périphérique 4 s'étend autour d'au moins une partie de la ou de chaque zone de décor 2. En d'autres termes, la zone périphérique 4 est adjacente d'au moins une partie de la zone de décor 2 selon la direction transversale Y et/ou selon la direction d'élévation Z. Selon un mode de réalisation, la zone périphérique 4 s'étend autour de tout le contour de la zone de décor 2. Selon ce mode de réalisation, la zone périphérique 4 entoure donc complètement la zone de décor 2 selon les directions transversale et d'élévation, comme représenté sur la Fig. 1. Lorsque l'élément de garnissage 1 comprend plusieurs zones de décor, la zone périphérique 4 s'étend entre les zones de décor et joint celles-ci entre elles. Selon un mode de réalisation, toutes les zones de décor sont entièrement entourées par la zone périphérique.

Selon un mode de réalisation, les zones périphérique 4 et de décor 2 sont venues de matière, c'est-à-dire que la zone périphérique et la ou les zones de décor 2 sont réalisées d'une seule pièce, par exemple par bi-injection, comme cela sera décrit plus en détail ultérieurement. Les zones périphérique et de décor sont par exemple réalisées polycarbonate, le polycarbonate étant opaque pour réaliser la zone périphérique et étant translucide pour réaliser la ou les zones de décor.

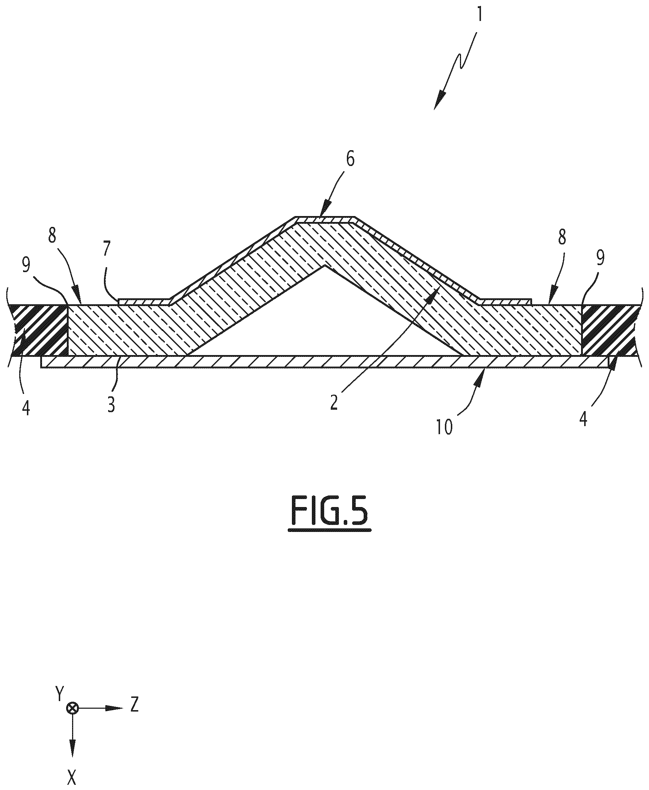

Une partie de la face externe de la zone de décor 2E est recouverte d'une couche de revêtement opaque 6, représenté figure 5, cette couche de revêtement opaque 6 créé une surépaisseur E sur une partie de la face externe 5 de la zone de décor 2, l'épaisseur E étant par exemple constante selon la direction longitudinale. Cette couche de revêtement opaque 6 de la face externe 5 de la zone de décor 2 peut être métallique, par exemple fait d'un alliage d'aluminium ou d'acier. La portion de la zone de décor 2 revêtue d'une couche de revêtement opaque 6 est désignée par l'expression « zone opaque ».

Avantageusement, le choix de matériaux métalliques pour le revêtement opaque 6 de la zone de décor 2 permet d'assurer un effet visuel chromé ou brillant par exemple dans la zone opaque. En outre, la couche de revêtement étant opaque, elle bloque le passage de la lumière au-delà de la face externe de la zone de décor 2 dans la zone opaque. En d'autres termes, la lumière émise du côté de la face interne de la zone opaque n'est pas visible depuis l'extérieur de l'élément de garnissage au niveau de la couche de revêtement 6.

Dans un mode de réalisation dans lequel plusieurs zones de décor distinctes existent, chacune de ces zones est partiellement revêtue d'une couche de revêtement opaque 6 telle que définie précédemment. De préférence, les surépaisseurs E des différentes zones de décor 2A, 2B revêtues d'une couche de revêtement opaque 6 sont égales, en variante, elle sont différentes.

La couche de revêtement opaque 6 ne recouvre pas entièrement la face externe 5 de la ou de chaque zone de décor 2 et laisse au moins une partie du contour de la ou de chaque zone de décor 2 à nue, c'est-à-dire non revêtue par la couche de revêtement opaque 6. Cette partie non revêtue forme la zone rétroéclairée 8 de l'élément de garnissage 1. En d'autres termes, depuis l'extérieur de l'élément de garnissage, les faces externes de la zone périphérique, de la ou des zones rétroéclairées et du ou des couches de revêtement sont visibles, tandis qu'une lumière émise du côté de la face interne n'est visible du côté de la face externe 5 que dans la zone rétroéclairée 8. La face externe 5 de la partie de la ou de chaque zone de décor revêtue par une couche de revêtement opaque 6 est quant à elle invisible depuis l'extérieur de l'élément de garnissage.

Ainsi, comme représenté sur la figure 5, la zone rétroéclairée 8 est une partie de la zone de décor 2, qui n'est pas couverte par la couche de revêtement opaque 6 précédemment décrit et s'étend dans la direction transversale et/ou d'élévation entre un premier bord 7 formé par le bord de la couche de revêtement opaque 6 et un deuxième bord 9 formé par la zone périphérique 4. Cette zone rétroéclairée 8 présente une largeur L, définie comme la distance entre le premier bord 7 et le deuxième bord 9, telle que représentée figure 1.

Par exemple, cette largeur L peut être sensiblement constante sur tout le pourtour de cette zone rétroéclairée 8.

Dans le mode de réalisation particulier représenté sur la figure 1, la zone rétroéclairée 8 entoure totalement la zone opaque selon les directions transversale Y et d'élévation Z.

Dans tout mode de réalisation comprenant plusieurs zones de décors, chaque zone de décor 2 définit une zone rétroéclairée 8 telle que décrit précédemment.

La zone rétroéclairée 8 étant translucide, elle peut, selon un mode de réalisation particulier, être éclairée, grâce à au moins une source de lumière 10 placée du côté de la face interne de l'élément de garnissage, de sorte que cette zone contraste visuellement avec la zone périphérique 4 et avec la zone de décor 2 revêtue. La source de lumière 10 peut être de toute forme, de type surfacique, ponctuel par exemple. La source de lumière 10 est par exemple placée en regard de la ou de chaque zone de décor, du côté de la face interne de celle(s)-ci.

Selon un mode de réalisation l'élément de garnissage comprend une unique source de lumière 10 éclairant les différentes zones rétroéclairées 8, par exemple d'un panneau de diodes éléctroluminescentes. En variante, l'élément de garnissage comprend plusieurs sources de lumière 10 éclairant chacune une ou plusieurs zones rétroéclairées 8. Il est également possible qu'une partie seulement des zones rétroéclairées 8 soit effectivement éclairée par une source de lumière 10.

L'invention permet donc de réaliser une zone de décor 2, possiblement en relief, avec un effet chromé. Cet effet chromé peut être mis en valeur par la lumière provenant de la zone rétroéclairée 8, notamment au moyen d'une puissance lumineuse élevée grâce à l'utilisation d'une source de lumière 10 adaptée au besoin et placée derrière la zone de décor 2.

Un procédé de réalisation permettant de réaliser l'élément de garnissage 1 précédemment décrit va maintenant être détaillé.

Une première étape du procédé de réalisation de l'élément de garnissage 1, dont le résultat est visible figure 2, consiste en la réalisation d'une zone de décor 2 selon l'invention.

Une deuxième étape du procédé de réalisation de l'élément de garnissage 1 consiste en la réalisation de la zone périphérique 4 selon l'invention.

La première étape et la deuxième étape peuvent se faire par bi-injection d'un matériau opaque pour réaliser la zone périphérique 4 et d'un matériau translucide pour réaliser la zone de décor 2.Ceci améliore l'effet visuel de l'élément de garnissage 1 par la continuité entre les deux zones..

La forme des deux zones est libre, en particulier, la zone de décor 2 peut présenter des reliefs comme illustré sur la figure 2.

Dans un mode de réalisation particulier dans lequel l'élément de garnissage 1 contient plusieurs zones de décor 2A, 2B, alors la première étape consiste en la réalisation de toutes ces zones par bi-injection.

Une troisième étape du procédé de réalisation de l'élément de garnissage 1 consiste en la réalisation de la couche de revêtement opaque 6 sur la face externe 5 de la zone de décor 2.

En particulier, cette étape peut être effectuée par dépôt physique en phase vapeur d'un matériau métallique.

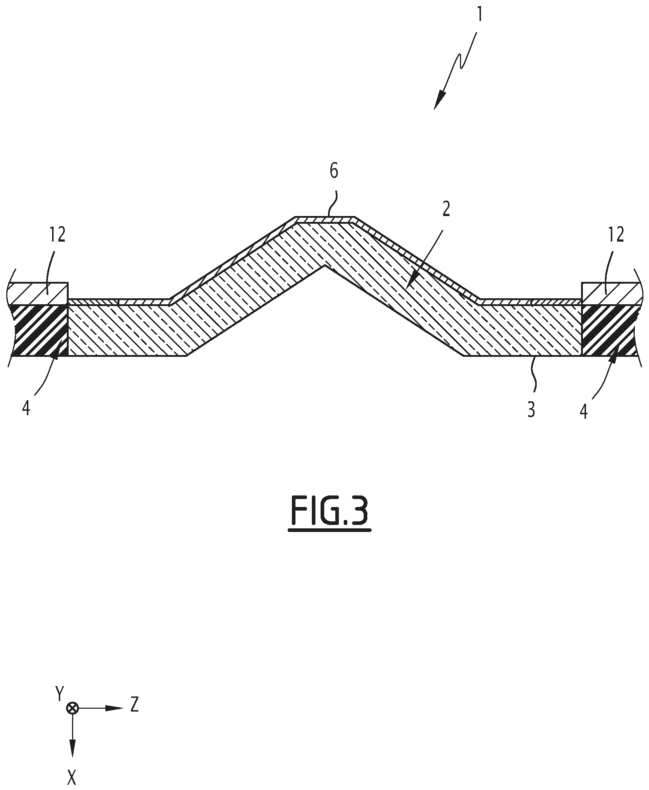

La figure 3 montre représente la pièce à la troisième étape du procédé.

Comme représenté sur la figure 3, lors du dépôt du revêtement opaque 6, la face externe 5 de sa zone périphérique 4 peut être munie d'un masque 12 permettant d'éviter le dépôt de la couche de revêtement opaque 6 sur la zone périphérique 4. Dans ce cas, le masque 12 est retiré à la fin de cette troisième étape, afin de poursuivre le procédé.

Dans un mode de réalisation dans lequel plusieurs zones de décor 2 sont présentes, un éventuel masque 12 peut être composé de plusieurs ouvertures, ou l'opération peut impliquer l'utilisation de plusieurs masques 12. Dans tous les cas, si un ou plusieurs masques 12 sont utilisés, ils sont tous retirés à la fin de l'opération. Avantageusement, l'opération de dépose de la couche de revêtement opaque 6 est faite en une passe pour toutes les zones à revêtir, en variante, elle peut être fait de manière séquentielle en plusieurs passes.

Dans un mode de réalisation particulier, la couche de revêtement opaque 6 s'étend, à l'issue de la troisième étape, sur toute la face externe 5 de la zone de décor 2, y compris sue la zone destinée à former une zone rétroéclairée 8. Dans ce cas, une quatrième étape consiste en l'ablation d'une partie de la couche de revêtement opaque 6, afin de réaliser la zone rétroéclairée 8. Cette ablation peut par exemple être effectuée par laser. Une telle ablation par laser permet de définir précisément la forme de la zone rétroéclairée. Cette quatrième opération peut concerner plusieurs zones de décor si le mode de réalisation considéré en possède plusieurs, il peut s'agir d'une partie ou de l'ensemble de ces zones.

En variante, la couche de revêtement opaque 6 ne s'étend pas sur la zone rétroéclairée 8, il n'est alors pas nécessaire d'utiliser une ablation d'une partie de la couche de revêtement opaque 6. Ce mode de réalisation peut être obtenue par l'utilisation de masques 12 qui s'étendent sur toute la face externe 5 de la zone rétroéclairée 8, c'est-à-dire qui s'étendent jusqu'au premier bord 7, en plus de recouvrir la zone périphérique. Dans le cas ou le mode de réalisation implique l'existence de plusieurs zones de décor 2, il peut être nécessaire de pratiquer l'ablation laser sur une partie, la totalité ou aucune des zones de décor 2.

Par exemple, on considère « opaque » un matériau dont la transmittance dans le domaine visible est inférieure ou égale à 40%, de préférence inférieure ou égale à 20%.

Avantageusement, la face externe 5 de la zone périphérique 4 et la face externe 5 de la zone de décor 2 sont dirigées du même côté, c'est-à-dire qu'elles définissent ensemble au moins une partie de la surface externe de l'élément de garnissage 1. De même, les faces internes 3 de la zone de décor 2 et de la zone périphérique 4 sont dirigées du même côté, c'est-à-dire qu'elles définissent ensemble au moins une partie de la surface interne de l'élément de garnissage 1.

Dans une variante de l'élément de garnissage 1, la couche de revêtement opaque 6 est réalisée en peinture ou en encre.

La couche de revêtement 6 est par exemple déposée par dépôt de peinture. En variante, la couche de revêtement opaque 6 est déposée par sérigraphie, ou par tampographie, ou encore par impression jet d'encre. L'utilisation d'une couche de peinture ou d'encre est avantageuse car elle permet une variété plus grande de couleurs que l'application de matériaux métalliques.

Avantageusement, la couche de revêtement opaque 6 est recouverte d'une couche de protection, par exemple transparente. La couche de protection couvre alors la zone de décor 2, dont la couche de revêtement opaque 6, et de préférence au moins une partie de la zone périphérique 4.

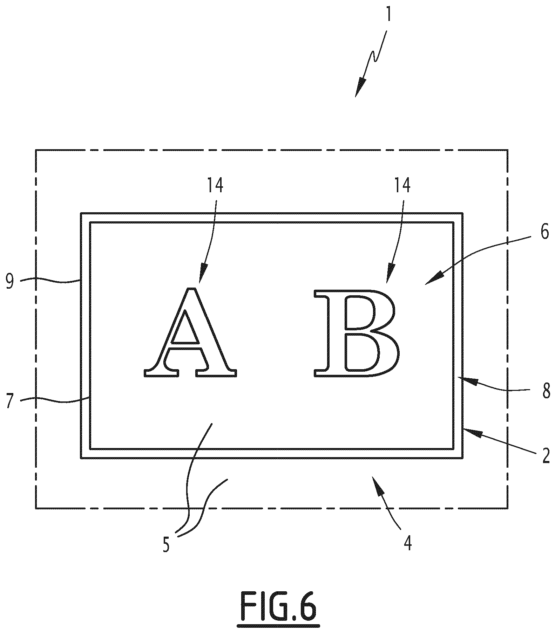

Dans une variante représentée sur la figure 6, l'élément de garnissage 1 comprend en outre au moins une zone rétroéclairée interne 14 totalement entourée par la couche de revêtement opaque 6. La zone rétroéclairée interne 14 est définie par toute partie de la zone de décor 2 dont la face externe 5 est dépourvue de couche de revêtement opaque 6 tout en étant totalement entourée de couche de revêtement opaque 6.

Tel que représenté sur la figure 6, l'élément de garnissage 1 comprend deux zones rétroéclairées interne 14, formant chacune un motif en forme de lettre. Il est entendu que cette représentation n'est donnée qu'à titre d'exemple que le l'élément de garnissage 1 peut comprendre moins ou plus de deux zones rétroéclairées internes 14.

Dans une variante du procédé de réalisation de l'élément de garnissage 1, la troisième étape du procédé, l'étape de dépôt de la couche de revêtement opaque 6, est effectuée par l'une des méthodes du groupe comprenant : le dépôt de peinture, la sérigraphie, la tampographie, et l'impression jet d'encre.

Une cinquième étape optionelle du procédé de fabrication de l'élément de garnissage 1 consiste en l'ablation d'une partie de la couche de revêtement opaque 6, afin de réaliser la ou les zones rétroéclairées internes 14 à la couche de revêtement opaque 6, tel que représenté sur la figure 6. Par exemple, cette étape est effectuée par ablation laser.

## Revendications

1. Elément de garnissage (1) de véhicule comprenant:
- au moins une zone de décor (2) s'étendant entre une face interne (3) et une face externe (5), ladite zone de décor (2) étant sensiblement translucide de sorte à laisser passer la lumière de la face interne (3) à la face externe (5)
- au moins une zone périphérique (4) entourant au moins une partie de la zone de décor (2), ladite zone périphérique (4) s'étendant entre une face interne (3) et une face externe (5) et étant opaque de sorte à empêcher le passage de la lumière de la face interne (3) à la face externe (5)
- une couche de revêtement opaque (6) s'étendant sur une partie de la face externe (5) de la zone de décor (2), de sorte à empêcher le passage de la lumière au travers de la partie de la zone de décor (2) s'étendant en regard de la couche de revêtement opaque (6),
- au moins une zone rétroéclairée (8) formée par la partie de la zone de décor s'étendant entre la couche de revêtement opaque (6) et la zone périphérique (4), ladite zone rétroéclairée (8) s'étendant entre un premier bord (7), formé par un bord de la couche de revêtement opaque, et un deuxième bord (9), formé par un bord de la zone périphérique (4), ladite zone rétroéclairée (8) laissant passer la lumière de la face interne (3) à la face externe (5).

2. Elément de garnissage (1) selon la revendication 1, dans lequel la zone rétroéclairée (8) et la zone périphérique sont venues de matière comprenant un matériau translucide pour former la zone de décor (2) et un matériau opaque formant la zone périphérique (4).

3. Elément de garnissage selon la revendication 1 ou 2, dans lequel la couche de revêtement opaque (6) est réalisée en un matériau métallique.

4. Elément de garnissage selon la revendication 1 ou 2, dans lequel la couche de revêtement opaque (6) est réalisée en peinture ou en encre.

5. Elément de garnissage (1) selon l'une quelconque des revendications précédentes, dans lequel la zone périphérique (4) entoure complètement la zone de décor (2).

6. Elément de garnissage (1) selon l'une quelconque des revendications précédentes, dans lequel la zone rétroéclairée (8) entoure complètement la partie de la zone de décor (2) revêtue du revêtement opaque (6).

7. Elément de garnissage (1) selon l'une quelconque des revendications précédentes, dans lequel une source de lumière (10) est placée du côté de la face interne (3) de la zone de décor (2), ladite source de lumière (10) produisant une lumière visible depuis la face externe (5) de la zone rétroéclairée (8).

8. Elément de garnissage (1) selon l'une quelconque des revendications précédentes, comprenant au moins une zone rétroéclairée interne (14), totalement entourée par la couche de revêtement opaque (6), définie par toute partie de la zone de décor (2) dont la face externe (5) est dépourvue de revêtement opaque (6).

9. Procédé de réalisation d'un élément de garnissage (1) selon l'une quelconque des revendications 1 à 8, comprenant les étapes suivantes :
- Réalisation d'une zone de décor (2) en un matériau translucide
- Réalisation d'une zone périphérique (4) en un matériau opaque autour d'au moins une partie de la zone de décor (2)
- Application d'une couche de revêtement opaque (6) sur la face externe (5) d'au moins une partie de la zone de décor (2)
- Définition d'une zone rétroéclairée (8) s'étendant entre un premier bord (7), formé par un bord de la couche de revêtement opaque (6), et un deuxième bord (9), formé par un bord de la zone périphérique, ladite zone rétroéclairée (8) laissant passer la lumière de la face interne (3) à la face externe (5).

10. Procédé de réalisation d'un élément de garnissage (1) selon la revendication 9, dans lequel une couche de revêtement opaque (6) est appliquée par dépôt physique en phase vapeur d'un matériau métallique.

11. Procédé de réalisation d'un élément de garnissage (1) selon la revendication 9, dans lequel la couche de revêtement opaque (6) est appliquée par l'une des méthodes du groupe comprenant : le dépôt de peinture, la sérigraphie, la tampographie, et l'impression jet d'encre.

12. Procédé de réalisation d'un élément de garnissage (1) selon l'une des revendications 9 à 11, dans lequel la couche de revêtement opaque (6) recouvre la totalité de la face externe de la zone de décor (2) dont une partie est retirée afin de former la zone rétroéclairée (8).

13. Procédé de réalisation d'un élément de garnissage (1) selon l'une des revendications 9 à 12, dans lequel la zone de décor (2) et la zone périphérique (4) sont réalisées d'une seule pièce par injection bi-matière.

14. Procédé de réalisation d'un élément de garnissage (1) selon l'une des revendications 9 à 13, comprenant une étape supplémentaire d'ablation d'une partie de la couche de revêtement opaque (6) pour réaliser au moins une zone rétroéclairée interne (14) totalement entourée par la couche de revêtement opaque.
